# EUROPÄISCHE PATENTSCHRIFT

(11) **EP 1 145 807 B1**
(45) Veröffentlichungstag und Bekanntmachung des Hinweises auf die Patenterteilung: **04.08.2010**
(21) Anmeldenummer: 01107092.7
(22) Anmeldetag: 17.04.2001
(51) Int. Cl.: B25J 19/00

(54) **Roboter mit aussenseitig verlaufendem Schutzschlauch**
Robot with a protective hose running on the outside of the robot
Robot avec un tuyau de protection flexible situé à l'extérieur du robot

(30) Priorität: 15.04.2000 DE 20007000 U
(43) Veröffentlichungstag der Anmeldung: 17.10.2001
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- WO-A-97/39505
- WO-A-98/19090
- US-A- 5 777 267
- PATENT ABSTRACTS OF JAPAN vol. 2000, no. 09, 13. Oktober 2000 (2000-10-13) -& JP 2000 167793 A (MEIDENSHA CORP), 20. Juni 2000 (2000-06-20)

## Beschreibung

Die Erfindung betrifft einen Roboter mit wenigstens einem zumindest teilweise außenseitig verlaufenden Schutzschlauch nach dem Oberbegriff des Anspruchs 1. Ein solcher Roboter ist aus dem Dokument WO 97/39505 A1 bekannt.

Bei mehrachsigen Robotern mit mehreren, relativ zueinander verschwenkbaren Teilen, insbesondere Roboterarmen, kommt es bei Bewegungen des Roboters zu Distanzänderungen der einzelnen Teile, was insbesondere bei zumindest teilweise außenseitig verlaufenden Schutzschläuchen zur Führung von Versorgungskabeln für Elemente und vornehmlich Werkzeuge des Roboters zu beachten ist. Diese müssen einerseits zur Aufnahme von Längenveränderungen in der Lage sein, andererseits bei Bewegungen des Roboters möglichst gering belastet werden, um eine hohe Standfestigkeit zu gewährleisten und eine vorzeitige Beschädigung zu verhindern.

Der Palettierroboter hat vier aktive Achsen (3 Grundachsen, 1 Handachse). Die aktive Handachse ist die Drehachse A6. A5 ist passiv und wird durch eine in einer Anlenkung 13 angreifende Schubstange 1a synchron mit A2 und A3 bewegt. Um für die zur Aufnahme von Längenveränderungen erforderlichen Längenreserven der Kabelführung zu sorgen ist es z.B. bekannt, die Versorgungskabel im Bereich der Achsen der Roboterarme in im wesentlichen kreisförmigen Schlaufen zu führen (DE 198 17 605) oder sie mittels einer Drehdurchführung mit einer Roboterhand, zu verbinden. Während letzteres aufwendig und teuer ist, schränkt die alleinige Führung der Versorgungskabel in Schlaufen die Beweglichkeit bzw. die Verschwenkbarkeit des Roboters, insbesondere der Roboterhand, ein.

Der Erfindung liegt daher die Aufgabe zugrunde, bei einem Roboter der eingangs genannten Art für eine verbesserte Kabelführung zu sorgen, die aufgrund einer hohen Längenreserve die Beweglichkeit des Roboters nicht beeinträchtigt und gleichzeitig die Versorgungskabel bzw. den diese aufnehmenden Schutzschlauch nicht oder nur gering belastet.

Erfindungsgemäß wird diese Aufgabe bei einem Roboter gemäß dem Anspruch 1 gelöst.

Durch die erfindungsgemäße Ausgestaltung wird bei durch Bewegungen des Roboters verursachten Längenänderungen des Schutzschlauchs dieser nicht unkontrolliert nachgezogen bzw. -geschoben, sondern durch Drehen der Wickelführung kontrolliert auf- und abgewickelt. Hieraus resultiert einerseits eine im wesentlichen uneingeschränkte Bewegungsfreiheit des Roboters, insbesondere ein hoher Drehwinkel der Halteeinrichtung für das Werkzeug, der z.B. eine Drehung des Werkzeugs um wenigstens 270° in jede Richtung ermöglicht. Andererseits werden die durch Zug- und Druckkräfte verursachte Belastungen des Schutzschlauchs durch das insbesondere reibschlüssige Auf- und Abwickeln auf bzw. von der Wickelführung verringert. Schließlich wird die Kompaktheit des Roboters erhöht, da die Wickelführung vermeidet, dass sich bei Drehung der A6 das Kabel unkontrolliert um Arm und Hand wickelt was besonders bei großen Drehwinkeln problematisch ist.

Um für ein ordnungsgemäßes Auf- und Abwickeln des Schutzschlauchs bei Bewegungen des Werkzeugs zu sorgen ist vorzugsweise vorgesehen, dass die Wickelführung zwei im wesentlichen deckungsgleiche mit Abstand angeordnete Teller aufweist, zwischen denen der Schutzschlauch aufgewickelt ist, wobei insbesondere der Abstand der Teller etwa der Stärke des Schutzschlauchs entspricht oder diese geringfügig übertrifft.

In bevorzugter Ausführung ist die Drehachse der Wickelführung parallel zu der Achse einer den Werkzeug-Montageflansch aufweisenden Roboterhand, insbesondere koaxial zu der Achse mit dem größten erforderlichen Schwenkwinkel, angeordnet.

Vorzugsweise ist eine stets enge Führung des Schutzschlauchs entlang des Roboters möglich, indem der Schlauch z.B. bei Bewegungen des Werkzeugs über die Wickelführung aufgewickelt und über die Führungsrollen zumindest entlang des an der Roboterhand angelenkten Roboterarms nachgeführt wird.

Der Schutzschlauch ist bevorzugt um die der Roboterhand abgewandte Roboterachse des Roboterarms in eine Schlaufe geführt, wobei in diesem Fall vorzugsweise wenigstens ein den Schutzschlauch in Umfangsrichtung der der Roboterhand abgewandten Roboterachse des Roboterarms führendes Führungselement vorgesehen ist, welches z.B. nach Art eines den Schlauch aufnehmenden Hohlzylinders ausgebildet sein kann.

Um für eine stets enge Führung des Schutzschlauchs am Roboter zu sorgen und ein einwandfreies Auf- und Abwickeln des Schutzschlauchs mittels der Wickelführung zu garantieren, ist der Schutzschlauch um die A3-Achse schlaufenförmig geführt und vorzugsweise in Aufwickelrichtung vorgespannt. Hierzu ist in bevorzugter Ausführung eine Rückstellfeder vorgesehen, die beispielsweise an dem Führungselement zur Führung des Schutzschlauchs in Umfangsrichtung der der Roboterhand abgewandten Roboterachse des an ihr angelenkten Roboterarms angeordnet sein kann. Durch diese Ausgestaltung können die für eine zufriedenstellende Bewegungsfreiheit erforderlichen Längenreserven des Schutzschlauchs von der Wickelführung durch Aufwickeln des Schlauchs aufgenommen werden.

Nachstehend ist die Erfindung anhand einer bevorzugten Ausführung unter Bezugnahme auf die Zeichnungen näher erläutert. Dabei zeigen:
- Fig. 1: eine perspektivische Ansicht eines Roboterarms mit einer hieran angelenkten Roboterhand mit einer Wickelführung für einen Schutzschlauch im aufgewickelten Zustand;
- Fig. 2: den Roboterarm gemäß Fig. 1 mit dem Schutz- schlauch in zumindest teilweise abgewickeltem Zu- stand;
- Fig. 3: eine schematische Ansicht des Schutzschlauchs in Richtung Pfeil III der Fig. 1 und
- Fig. 4: einen Schnitt IV-IV durch den Schutzschlauch gemäß Fig. 2.

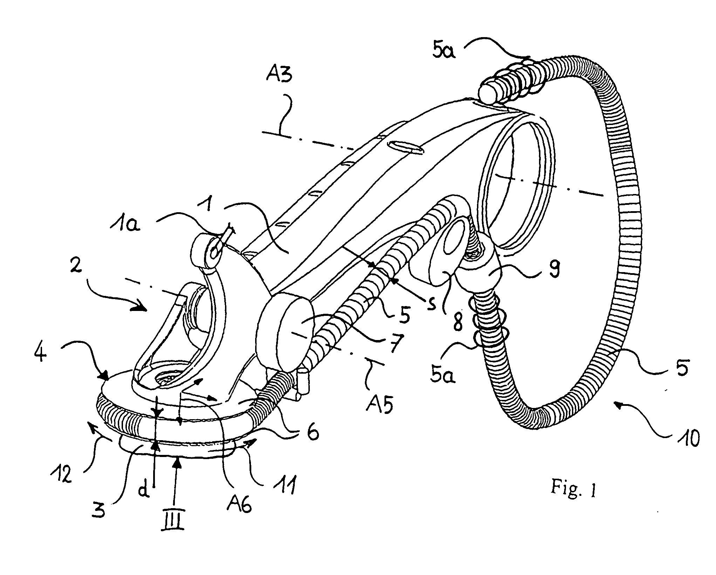

In Fig. 1 ist ein Roboterarm 1 eines mehrachsigen Industrieroboters, z.B. eines Palettierroboters dargestellt. Der Roboterarm 1 weist eine an einer endseitigen Schwenkachse A5 angelenkten Roboterhand 2 auf. Der Roboterarm 1 ist zum Beispiel an seiner der Roboterhand 2 abgewandten Schwenkachse A3 an einem weiteren Roboterarm (nicht gezeigt) angelenkt, der wiederum an seinem dem Roboterarm 1 abgewandten Ende um eine zweite (horizontale) Roboterachse verschwenkbar ist und auf einer ersten um eine (vertikale) Achse schwenkbaren Roboterbasis, wie einem Karussell, angeordnet ist (nicht dargestellt). Die Roboterhand 2 ist um eine Achse (A5) schwenkbar und weist einen um die A6-Achse drehbaren Werkzeugmontageflansch 3, für ein Roboterwerkzeug (nicht gezeigt) auf. Zur Stromversorgung des Werkzeugs ist ein außenseitig entlang des Roboterarms 1 geführter Schutzschlauch 5, wie ein Kabelführungsschlauch vorgesehen, welcher von einer im Bereich des Montageflanschs 3 der Roboterhand 2 angeordneten Wickelführung 4 zum Auf- und Abwickeln der in Abhängigkeit der jeweiligen Stellung des Werkzeugs erforderlichen Länge des Schutzschlauchs 5 aufgenommen ist. Zur Führung des Schutzschlauchs 5 ist die Wickelführung 4 mit zwei im wesentlichen deckungsgleichen, mit Abstand angeordneten Tellern 6 ausgestattet, zwischen denen der Schlauch 5 aufgewickelt ist. Der Abstand der Teller 6 entspricht etwa der Stärke s des Schutzschlauchs 5. Die Längenreserve steckt z.B. in der Schlaufe mit Spannfedern 5a die über die gesamte Länge der Schaufelschlaufe angeordnet ist. Die Drehachse der Wickelführung 4 entspricht bei der gezeigten Ausführung der Drehachse A6 der Roboterhand 2.

Der Roboterarm 1 weist endseitig jeweils eine koaxial bzw. parallel zu den Schwenkachsen A3, A5 angeordnete Führungsrolle 7, 8 auf, die den Schutzschlauch 5 im wesentlichen parallel zu dem Roboterarm 1 und diesem eng anliegend führen. Zur seitlichen Abstützung des Schutzschlauchs 5 auf den Führungsrollen 7, 8 sind diese mit einer etwa dem Querschnitt des Schutzschlauchs 5 entsprechenden, z.B. im wesentlichen halbkreisförmigen Umfangsnut ausgestattet. Der Schutzschlauch 5 ist um die der Roboterhand 2 abgewandte Schwenkachse A3 des Roboterarms 1 mittels eines nach Art eines Holzylinders ausgebildeten Führungselements 9 in einer Schlaufe 10 geführt, die für die Längenreserve des Schutzschlauchs 10 sorgt. Die Wickelführung sorgt für eine definierte Kabelführung bei Drehbewegung um die Achse A5. Ansonsten würde sich das Kabel unkontrolliert um den Arm 1 und die Hand 2 wickeln wodurch ein Verschleiß und die Gefahr der Beschädigung und ein erhöhter Platzbedarf gegeben wäre. Um den Schutzschlauch 5 stets eng anliegend entlang dem Roboterarm 1 zu führen, ist der Schutzschlauch 5, z.B. mittels an dem Führungselement 9 angeordneter Rückstellfedern (nicht dargestellt) in Abwickelrichtung 11 vorgespannt.

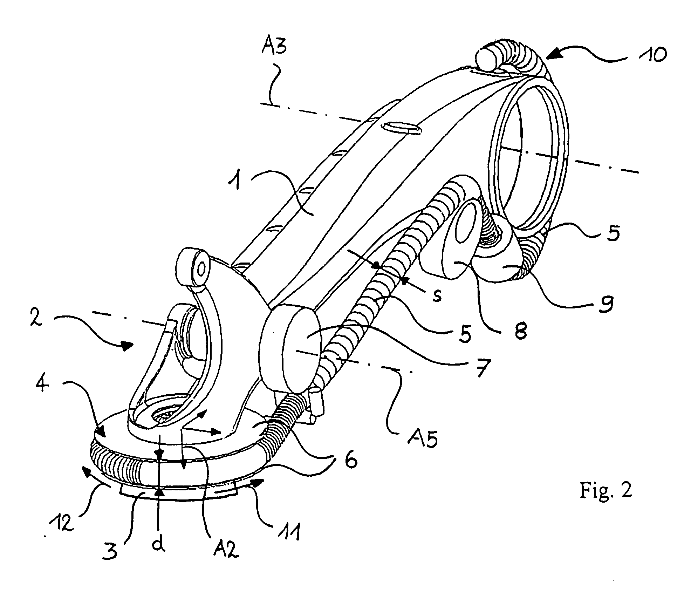

In der in Fig. 1 dargestellten Stellung des Roboters ist der Schutzschlauch 5 im wesentlichen vollständig von der Wickelführung 4 abgewickelt; die mit Spiel um die A3-Achse geführte Schlaufe 10 stellt die Längenreserve des Schutzschlauchs 5 dar. Dreht sich der Handflansch in Aufwickelrichtung 12, wird der Schlauch auf die Aufwickeleinrichtung gewickelt und die in der Schlaufe befindliche Längenreserve nachgezogen und aufgebracht. Fig. 2 zeigt den Zustand mit vollgewickelter Aufwickelvorrichtung und kleinstmöglicher Schlaufe 10. Auf diese Weise wird eine uneingeschränkte Bewegungsfreiheit des Roboters, insbesondere des Werkzeugs, bei ordnungsgemäßer Führung des Schutzschlauchs garantiert. Weiterhin wird der Schutzschlauch durch Auf- und Abwickeln auf bzw. von der Wickelführung so wenig wie möglich belastet, was in einer hohen Lebensdauer desselben resultiert.

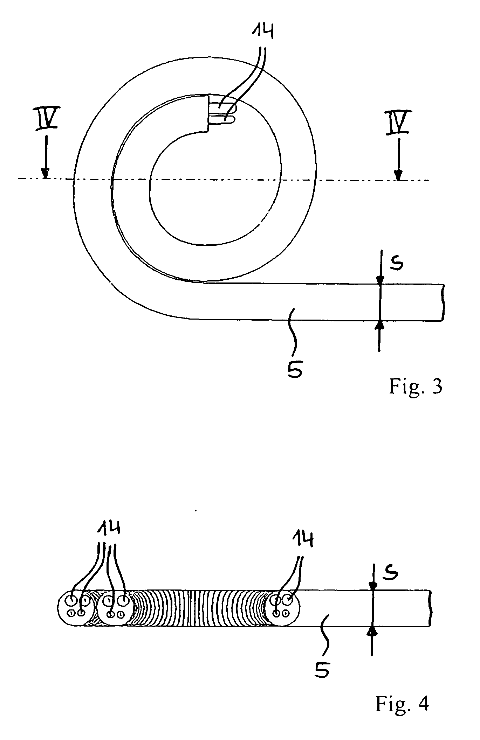

Fig. 3 ist eine schematische Draufsicht auf den zwischen den Tellern 6 der Wickelführung 4 (Fig. 1) aufgewickelten Schutzschlauch 5 entnehmbar, welcher in der gezeigten Ausführung als Kabelführungsschlauch für Versorgungskabel 14 dient. Fig. 4 ist ein Querschnitt durch den aufgewickelten Schutzschlauch gemäß Fig. 3 zu entnehmen.

### Bezugszeichenliste

- 1: Roboterarm
- 2: Roboterhand
- 3: Halteeinrichtung
- 4: Wickelführung
- 5: Schutzschlauch
- 6: Teller
- 7: Führungsrolle
- 8: Führungsrolle
- 9: Führungselement
- 10: Schlaufe
- 11: Abwickelrichtung
- 12: Aufwickelrichtung
- 14: Versorgungskabel
- d: Abstand der Teller
- s: Stärke des Schutzschlauchs

## Patentansprüche

1. Roboter mit wenigstens einem zumindest teilweise außenseitig verlaufenden Schutzschlauch (5), insbesondere einem Versorgungskabel von Werkzeugen des Roboters aufnehmenden Kabelführungsschlauch, mit dem Schutzschlauch (5) zugeordneten Führungsrollen (7, 8) und mit einer im Bereich eines Werkzeug-Montageflansches angeordneten Wickelführung (4) zum Auf- und Abwickeln der in Abhängigkeit der Stellungen des Werkzeugs erforderlichen Länge des Schutzschlauchs (5), **dadurch gekennzeichnet, dass** wenigstens zwei den Schutzschlauch (5) parallel zu einem an einer Roboterhand (2) angelenkten Roboterarm (1) führende und endseitig an dem Roboterarm (1) angeordnete Führungsrollen (7, 8) vorgesehen sind, von denen jeweils eine koaxial zu der endseitig an dem Roboterarm (1) angeordneten, entsprechenden Roboterschwenkachse (A3 bzw. A5) gelagert ist.

2. Roboter nach Anspruch 1, **dadurch gekennzeichnet, dass** die Wickelführung (4) zwei im wesentlichen deckungsgleiche, mit Abstand angeordnete Teller (6) aufweist, zwischen denen der Schutzschlauch (5) aufgewickelt ist.

3. Roboter nach Anspruch 2, **dadurch gekennzeichnet, dass** der Abstand (d) der Teller (6) etwa der Stärke (s) des Schutzschlauchs (5) entspricht oder diese geringfügig übertrifft.

4. Roboter nach einem der Ansprüche 1 bis 3, **dadurch gekennzeichnet, dass** die Drehachse der Wickelführung (4) parallel zu der Drehachse (A6) der den Montageflansch (3) aufweisenden Roboterhand (2) angeordnet ist.

5. Roboter nach einem der Ansprüche 1 bis 4, **dadurch gekennzeichnet, dass** der Schutzschlauch (5) durch die Führungsrollen (7, 8) zumindest entlang des an der Roboterhand (2) angelenkten Roboterarms (1) eng anliegend geführt ist.

6. Roboter nach einem der Ansprüche 1 bis 5, **dadurch gekennzeichnet, dass** der Schutzschlauch (5) um die der Roboterhand (2) abgewandte Roboterachse (A3) des Roboterarms (1) in einer Schlaufe (10) geführt ist.

7. Roboter nach Anspruch 6, **dadurch gekennzeichnet, dass** wenigstens ein den Schutzschlauch (5) in Umfangsrichtung der Roboterhand (2) abgewandten Roboterachse (A3) des Roboterarms (1) führendes Führungselement (9) vorgesehen ist.

8. Roboter nach Anspruch 7, **dadurch gekennzeichnet, dass** das Führungselement (9) nach Art eines den Schutzschlauch (5) aufnehmenden Hohlzylinders ausgebildet ist.

9. Roboter nach einem der Ansprüche 1 bis 8, **dadurch gekennzeichnet, dass** der Schutzschlauch (5) in Abwickelrichtung (12) vorgespannt ist.

10. Roboter nach Anspruch 9, **dadurch gekennzeichnet, dass** der Schutzschlauch (5) mittels einer Rückstellfeder vorgespannt ist.

11. Roboter nach Anspruch 10, **dadurch gekennzeichnet, dass** die Rückstellfeder an dem Führungselement (9) angeordnet ist.

## Claims

1. A robot having at least one protective hose (5) extending at least partially on the outside, in particular a cable guide hose accommodating supply cables for robot tools, having guide rollers (7, 8) associated with the protective hose (5) and having a winding guide (4) arranged in the region of a tool mounting flange for winding and unwinding the length of protective hose (5) needed as a function of the positions of the tool, **characterised in that** at least two guide rollers (7, 8) are provided, which guide the protective hose (5) parallel to a robot arm (1) coupled to a robot hand (2) and are arranged terminally on the robot arm (1), in each case one of said guide rollers (7, 8) being mounted coaxially with the corresponding robot pivot axis (A3 and A5 respectively) arranged terminally on the robot arm (1).

2. A robot according to claim 1, **characterised in that** the winding guide (4) comprises two substantially congruent, spacedly arranged discs (6), between which the protective hose (5) is wound.

3. A robot according to claim 2, **characterised in that** the spacing (d) between the discs (6) corresponds approximately to or slightly exceeds the thickness (s) of the protective hose (5).

4. A robot according to any one of claims 1 to 3, **characterised in that** the axis of rotation of the winding guide (4) is arranged parallel to the axis of
rotation (A6) of the robot hand (2) comprising the mounting flange (3).

5. A robot according to any one of claims 1 to 4, **characterised in that** the protective hose (5) is guided by the guide rollers (7, 8) in close-fitting manner at least along the robot arm (1) coupled to the robot hand (2).

6. A robot according to any one of claims 1 to 5, **characterised in that** the protective hose (5) is guided in a loop (10) about the robot axis (A3), remote from the robot hand (2), of the robot arm (1).

7. A robot according to claim 6, **characterised in that** at least one guide element (9) is provided, which guides the protective hose (5) in the circumferential direction of the robot axis (A3), remote from the robot hand (2), of the robot arm (1).

8. A robot according to claim 7, **characterised in that** the guide element (9) takes the form of a type of hollow cylinder accommodating the protective hose (5).

9. A robot according to any one of claims 1 to 8, **characterised in that** the protective hose (5) is pretensioned in the unwinding direction (12).

10. A robot according to claim 9, **characterised in that** the protective hose (5) is pretensioned by means of a restoring spring.

11. A robot according to claim 10, **characterised in that** the restoring spring is arranged on the guide element (9).

## Revendications

1. Robot avec au moins un tuyau de protection flexible (5) situé au moins en partie à l'extérieur du robot, notamment un câble d'alimentation des outils du robot logeant le tuyau flexible de guidage de câble, avec le tuyau de protection flexible (5) associé à des rouleaux de guidage (7, 8) et avec un guide d'enroulement (4) disposé dans la zone d'une bride de montage d'outil pour enrouler et dérouler la longueur nécessaire du tuyau de protection flexible (5) en fonction des positions de l'outil, **caractérisé en ce qu'**on prévoit au moins deux rouleaux de guidage (7, 8) guidant le tuyau de protection flexible (5) parallèlement à un bras de robot (1) rattaché de façon articulée à une main de robot (2) et disposés contre le bras de robot (1) en son extrémité, parmi lesquels est prévu un axe de pivotement de robot (A3 et/ou A5) correspondant disposé coaxialement par rapport au côté d'extrémité, contre le bras de robot (1).

2. Robot selon la revendication 1, **caractérisé en ce que** le guide d'enroulement (4) comporte deux disques (6) disposés pour l'essentiel de façon coïncidente, avec un certain écartement, et entre lesquels le tuyau de protection flexible (5) est enroulé.

3. Robot selon la revendication 2, **caractérisé en ce que** l'écartement (d) des disques (6) correspond approximativement à l'épaisseur (s) du tuyau de protection flexible (5) ou est légèrement supérieur à elle.

4. Robot selon l'une quelconque des revendications 1 à 3, **caractérisé en ce que** l'axe de rotation du guide d'enroulement (4) est disposé parallèlement à l'axe de rotation (A6) de la main de robot (2) comprenant la bride de montage (3).

5. Robot selon l'une quelconque des revendications 1 à 4, **caractérisé en ce que** le tuyau de protection flexible (5) est introduit en relation étroite à travers les rouleaux de guidage (7, 8) au moins le long du bras de robot (1) relié de façon articulée à la main de robot (2).

6. Robot selon l'une quelconque des revendications 1 à 5, **caractérisé en ce que** le tuyau de protection flexible (5) est introduit dans une boucle (10) autour de l'axe de robot (A3) du bras de robot (1) opposé à la main de robot (2).

7. Robot selon la revendication 6, **caractérisé en ce qu'**au moins un élément de guidage (9) guidant le tuyau de protection flexible (5) dans la direction circonférentielle de l'axe de robot (A3) du bras de robot (1) opposé à la main de robot (2) est prévu.

8. Robot selon la revendication 7, **caractérisé en ce que** l'élément de guidage (9) est réalisé à la façon d'un cylindre creux logeant le tuyau de protection flexible (5).

9. Robot selon l'une quelconque des revendications 1 à 8, **caractérisé en ce que** le tuyau de protection flexible (5) est précontraint dans la direction de déroulement (12).

10. Robot selon la revendication 9, **caractérisé en ce que** le tuyau de protection flexible (5) est précontraint à l'aide d'un ressort de rappel.

11. Robot selon la revendication 10, **caractérisé en ce que** le ressort de rappel est disposé au niveau de l'élément de guidage (9).
